# EUROPEAN PATENT SPECIFICATION

(11) **EP 3 569 586 B1**
(45) Date of publication and mention of the grant of the patent: **12.02.2025**
(21) Application number: 19174354.1
(22) Date of filing: 14.05.2019
(51) Int. Cl.: C05F 17/00, C05F 17/50, C05F 17/40

(54) **PROCESS FOR TRANSFORMING ANAEROBIC DIGESTATE FROM BIOGAS POWER PLANTS INTO BIO-FERTILISERS AND SUBSTRATE**
VERFAHREN ZUR UMSETZUNG VON ANAEROBEM DIGESTAT AUS BIOGASKRAFTWERKEN IN BIO-DÜNGEMITTEL UND SUBSTRAT
PROCEDE DE TRANSFORMATION DE DIGESTATE ANAEROBIQUE DE CENTRALES ELECTRIQUES AU BIOGAZ EN ENGRAIS ET SUBSTRAT

(30) Priority: 14.05.2018 IT 201800005357
(43) Date of publication of application: 20.11.2019
(73) Proprietor: CF Energy Service S.r.l., 84012 Angri (SA) (IT)
(72) Inventor: CATTANEO, Giancarlo, 84012 ANGRI (SA) (IT); FRUNZO, Luigi, 80125 Napoli (NA) (IT)
(74) Representative: Santi, Filippo

(56) References cited:
- US-A1- 2012 074 058
- US-A1- 2013 047 852
- US-B1- 6 299 774
- US-B2- 7 014 768

## Description

This invention relates to a process and a plant for the exploitation of anaerobic digestate leaving a biogas energy production plant.

More in detail, the invention relates to the treatment of the liquid and solid fractions of the digestate obtained from the anaerobic digesters, respectively for the production of sterilised liquid fertilisers with a reduced content of ammonium nitrate and pasteurised solid fertilisers rich in nitrogen, as well as new matrices to be used anaerobically for the production of energy.

Anaerobic digestion is a degradation process actuated by a microbial consortium which, operating in the absence of oxygen inside a biodigester, determines the degradation of the organic substance with the production of gaseous mixture rich in methane, which is generically called biogas, and a liquid effluent rich in nutrients, such as nitrogen and phosphorous and micro-elements called digestate. In the anaerobic digestion plants the biogas is used for the production of electricity through a cogenerator, that is, an internal combustion engine powered with biogas which rotates a generator for the production of electricity.

The cogenerator produces: electrical energy; low temperature thermal energy (approx. 80°C) in the form of hot water, usually used for pre-heating the biodigester as well as the other users connected; and high temperature thermal energy (more than 300°C) in the form of exhaust fumes coming from the engine, which are normally introduced a such into the atmosphere.

Currently, the digestate leaving the biogas plant represents a by-product of the production of energy by anaerobic digestion and its treatment represents one of the most significant running costs, due both to the quantity (substantially the same as material entering) and the means of treatment, since:
- in the case of plants fed by waste, the digestate itself represents a waste,
- in the case of plants serving farms, the digestate can be reused on the land cultivated with limitations, in terms of quantity per hectare, imposed by the current regulations; even though some types of digestate could be sold as fertilisers, if they complied with the current regulations.

For this reason, the digestate is mostly reused for agricultural purposes by spreading on the farmland, which as well as being very costly, can result in serious pollution phenomena, in particular, but not only, linked to the exceeding of the content of nitrates which bacterial flora and the cultivations active on the land can support, leading to nitrates in the groundwater. Therefore, at the moment, the plants for treatment of digestate try substantially to reduce the nitrogen content, in order to reduce the surface areas necessary for the spreading (and the relative costs) imposed by the regulations on the agronomical reuse of the digestate.

In order to resolve this problem, there are prior art systems which attempt to remove the most volatile part of the nitrogen content, that is, the ammonium part (approx. 50% of total), for example by using stripping systems. The ammonia transfers from the liquid fraction to the gaseous fraction when the liquid is heated. In the current stripping systems, the cooling water of the cogenerator is reused to bring the liquid fraction of the digestate to approximately 75°C, in order to remove part of the ammonia (stripping) and then combine it with sulphuric acid during a second step and obtain ammonium sulphate, which is a salt that can be used in farming.

However, the above-mentioned stripping systems are not widespread, substantially for the following reasons:
1) the temperatures reached are too low and the quantity of digestate which can be treated per day is insufficient with respect to that produced;
2) there are high operating costs, due to the electricity supply to the plant, for circulating the cooling water of the cogenerator, the liquid digestate, the gases extracted and the sulphuric acid;
3) the ammonium sulphate obtained is dissolved in water and in order for it to be used it must be dried, with further additional costs.

Other technologies are aimed at reducing the volume of digestate, in order to reduce both the transport and treatment costs. The reduction is obtained by filtering and/or drying the liquid digestate, with consequent consumption of large quantities of energy and emissions into the atmosphere of vapours with a high ammonia content.

A further drawback of the above-mentioned systems, and in particular of the systems for treatment of livestock effluents and agro-industrial by-products, is represented by the fact that the digestates of animal origin cannot be used in fourth range farming production, where leaves in contact with the soil are eaten which could contain bacteria of an animal origin, which could be potentially pathogenic (for example, Escherichia coli or Salmonella). On the other hand, the digestates of animal origin are characterised by the presence of nutrients (for example, nitrogen, phosphorous and potassium), microelements (for example, calcium, magnesium, iron, zinc) and humic compounds, which would render the digestates particular precious, if they could be used in intensive farming practices, such as, for example, cultivation in greenhouses.

Lastly, the digestates are rich in lignocellulosic compounds, carbon-based molecules, which cannot be degraded by means of anaerobic digestion and which, therefore, are found exactly the same at the outlet of the biodigester. These molecules constitute a potential source of carbon, which could be used by the anaerobic microorganisms in the biodigester.

In addition, the following documents are known: US2012/074058 A1, which concerns a solid-liquid separation method for bio-waste material treatment; US6299774 B1, which concerns a process involving the anaerobic digestion of feedstocks; US7014768 B2, which concerns a process for removal and recovery of nutrients and recycling of water from digested manure or other organic wastes; and US2013/047852 A1, which concerns a method for removing ammonia or reducing ammonium from biogas plant fermentation liquids or biogas plant fermentation residues.

In light of the above, there is clearly a need to provide a process for the treatment of digestate which is able to remove a significant part of the ammonia contained in the liquid transferring and fixing the nitrogen during the solid phase, and which allows a product to be obtained which is sterilised and pasteurised, that is to say, free of the bacterial load, and which could therefore be sold for farming, even biological farming. Lastly, it has been found opportune, by means of this invention, to hydrolyse the lignocellulosic compounds contained in the liquid digestate, in order to obtain new organic substrate for the production of a further flow of biogas, in this way reducing the need of matrices entering the biodigester and the relative cost. The aim of the invention is to have zero emissions, reusing completely the materials entering the system, including the exhaust gases of the engine, in such a way that it is bio-sustainable, with the reuse and the exploitation of the matrices which currently represent a cost, not merely in economic terms but also environmentally.

The proposed invention falls within this context, with the aim of providing a process method, as well as the relative technological plant, aimed at treatment of the digestate in order to obtain fertilisers, both solid and liquid, characterised by a high content of carbon, nutrients (nitrogen and phosphorous) micro-nutrients and micro-elements, and further organic substrate for the production of biogas, which can be reused inside the biodigester, thereby reducing the matrices at the inlet and the matrices at the outlet, and the related costs.

These and other results are obtained with a process and a plant for the treatment of the nitrogen present in the digestate.

The plant according to this disclosure comprises a separator designed to separate the anaerobic digestate into a liquid fraction and a solid fraction and is characterised in that it comprises a tower for stripping the ammonia and a biofiltering bed, preferably contained inside a container. Said biofiltering bed comprises the solid fraction of the digestate, preferably suitably ground, through which it is possible to carry out a process bio-filtration and bio-absorption of the ammonium nitrate which is fixed on the solid matrix in the form of nitric nitrogen.

The heart of the plant therefore comprises a stripping tower, in which are conveyed and circulated the high temperature exhaust fumes produced by a cogenerator, which flow inside the stripping tower in counter-current mode with respect to the liquid fraction of the digestate. In particular, the hot fumes are preferably sent directly from the cogenerator towards said stripping tower, without being cooled upstream of the tower by heat exchangers. Alternatively, if necessary, said stripping tower can be connected to a dedicated boiler.

The passage of said fumes at a high temperature allows, fundamentally, the following effects to be obtained:
i) removal of a fraction of the ammonium nitrate from the liquid fraction, which can also be a total removal /purification of the ammonia,
ii) sterilisation of the liquid fraction,
iii) hydrolysis of the lignocellulosic compounds in substrates bioavailable to the anaerobic bacteria(e.g. cellulose and other soluble monomers),
iv) obtaining a sterilised and concentrated fertiliser following the evaporation of a large part of the water contained in the liquid digestate treated, and
v) if necessary, purification of the exhaust fumes coming from said cogenerator from the nitrogen oxides (NOₓ).

This reuse of the liquid fraction of the digestate in the biodigester has the further advantage of returning into the digester the heat contained in it, in order to heat the biodigester, with evident savings in the thermal energy produced in the plant.

Lastly, with regard to the removal of the nitrogen oxides (NOₓ) from the exhaust fumes insufflated, this removal occurs thanks to the passage of said fumes through said liquid fraction, which is rich in ammonia and urea, with consequent elimination of the oxides NOₓ in the outgoing emissions. For this reason, a gaseous flow is obtained at the outlet from said tower which is rich in ammonia and water vapour at a temperature of approximately 80°C and a liquid fraction sterilised and depleted of ammonia.

Moreover, the aim of the invention is to enrich with nitrogen the dry or solid fraction of the digestate, reinserting the ammonium nitrate stripped from the liquid fraction in a biofiltering bed made with the solid separate digestate, to obtain a high quality solid fertiliser, as well as reducing practically to zero the losses of ammonia into the atmosphere.

In particular, said solid fraction can be ground so that it has a grain size such as to have a quantity of total surface area of material which is adequate to favour the bio-absorption of the ammonium nitrate insufflated in it.

Moreover, the times of residence of the insufflated gas being inversely proportional to the grain size of the biofiltering bed can be calculated on the basis of the requirements.

If necessary, this dry fraction can be further enriched by inserting structuring organic matrices and acids in order to improve the capacity of linking the nitrogen introduced with the vapours at the inlet.

Lastly, the solid fraction of the digestate is sterilised by this process and by the subsequent aerobic digestion, as this is subjected for a sufficiently long period to a high temperature (duration and temperature to reach are inversely proportional), in order to destroy any pathogenic germs contained in it.

This process, according to the invention, does not therefore determine any removal of nitrogen from the digestate in absolute terms, just a movement from the liquid fraction (which has too much ammonia) to the solid fraction, both in quantitative and qualitative terms, that is, the nitrogen will change from the ammonium form (volatile) of the liquid digestate to the organic form in the solid phase, obtaining an organic and biological fertiliser with a slower release of nitrogen.

The aim of the invention is therefore to provide a process and a plant for the exploitation of anaerobic digestate leaving a biogas energy production plant; in particular, the digestate leaving changes from a waste to be disposed of to a fertiliser which can be sold and a new organic matrix which can be reused for feeding the biodigester.

A further aim of the invention is that the process and the plant can determine a substantial reduction in the running costs of the biodigester by means of:
i) reduction of the digestate treatment costs,
ii) reduction of the quantity of the matrices entering the biodigester, which are reduced thanks to the reuse of the digestate treated in the biodigester, in particular of the liquid fraction of the digestate coming from the stripping tower,
iii) new incomes deriving from the sale of the fertilisers, and, in particular sterilised liquid fertilisers for ferti-irrigation and pasteurised solid fertilisers for basal dressing, and
iv) reuse of the heat of the fumes also for heating the digester and, therefore, saving of thermal energy which would otherwise be dispersed into the environment.

Yet another aim of the invention is to provide a process and a plant which are substantially simple, safe and reliable.

A specific object of the invention is therefore a process for the exploitation of the anaerobic digestate leaving biogas energy production plants, said biogas energy production plants comprising a biodigester designed to treat an organic matrix and to produce biogas and a digestate and a cogenerator, fed by the biogas coming from said biodigester and designed to produce energy and exhaust gases; said process comprising the following steps:
- separating digestate coming from said biodigester to provide a liquid fraction, optionally comprising solid residues, and a solid fraction;
- simultaneously with, before and/or after said separating step, grinding said digestate and/or said solid fraction, for example by using grinding means;
- stripping ammonia of the liquid fraction obtained in said separating step by means of the exhaust gases coming from said cogenerator, to obtain a gas rich in ammonia and water vapour and a liquid fraction which is sterilised and depleted of ammonia designed to be used as liquid fertiliser; and
- insufflating the solid fraction obtained in said separating step by means of the gas obtained in said stripping step to obtain a solid fraction enriched in nitric nitrogen and pasteurised; wherein said gas insufflated in said solid fraction is pre-mixed with air;
said process being characterised in that said gas insufflated in said solid fraction and pre-mixed with air has a temperature of between 60°C and 80°C.

Said liquid fraction obtained from said separating step of the digestate can comprises solid residue, which can comprise, for example, lignocellulosic residue, and said solid fraction can contain a certain percentage of moisture or a residual aqueous fraction.

According to the invention, said process can further comprises the following steps:
- withdrawing a first part of said liquid fraction depleted of ammonia obtained in said stripping step designed to be used as sterilised liquid fertiliser; and
- sending to said biodigester a remaining part of said liquid fraction depleted of ammonia obtained in said stripping step.

According to the invention, said grinding step can be step for grinding the solid fraction, prior to the insufflating step, and/or a step for grinding the digestate, preferably prior to the separating step. In particular, the grinding step can occur inside said separator; moreover, said grinding step is preferably performed by means of grinder pumps.

Again according to the invention, the mechanical treatment step can produce a solid fraction with an average grain size of between approximately 100µm and approximately 5mm. This grain size is in fact designed to guarantee low permeability and therefore high times of residence of the gases in the bed, thereby maximising the bio-absorption of the ammonia inside the solid matrix.

According to the invention, when said liquid phase comprises solid residues, said stripping step can comprise the following sub-steps:
- grinding solid residues of said liquid fraction using grinding means;
- nebulising said liquid fraction comprising shredded solid residue; and
- flowing said nebulised liquid fraction in counter-current mode with respect to said exhaust gases. In particular, said sub-steps can be repeated inside the process in order to favour, with the recirculation of the liquid fraction, the degradation of the lignocellulosic compounds inside said liquid fraction. It should be noted that said recirculation of the liquid fraction inside the stripping tower can also occur without the grinding step, in order to optimise the stripping of the ammonia.

Moreover, according to the invention, said stripping step can occur at temperatures of between 260°C and 460°C, preferably equal to approximately 320°C.

Further, according to the invention, said step of insufflating the solid fraction can occur at a temperature of between 75°C and 80°C.

Again, according to the invention, said stripping step occurs without the use of pH correctors, such as, for example, NaOH.

Moreover, according to the invention, said stripping step can occur with counter-current flow, respectively, of said exhaust fumes and of said liquid fraction.

Another aspect which is not part of the invention is a plant for transforming into fertilizers anaerobic digestate leaving biogas energy production plants, said biogas energy production plants comprising a biodigester designed to treat an organic matrix and to produce biogas and a digestate and a cogenerator, fed by the biogas coming from said biodigester and designed to produce energy and exhaust gases; said plant being characterised in that it comprises:
- a separator, fed by the digestate coming from said biodigester and designed to provide a liquid fraction and a solid fraction;
- grinding means, positioned upstream and/or downstream of said separator (3), for grinding said digestate and/or said solid fraction;
- a stripping tower, fed at the top by said liquid fraction and at the bottom by the exhaust gases coming directly from said cogenerator, and designed to produce a gas rich in ammonia and water vapour and a liquid fraction depleted of ammonia;
- a biofiltering bed, fed by the solid fraction coming from said separator and by the gas coming from said stripping tower and designed to supply a solid fraction enriched with nitrogen and pasteurised; and
- an output of liquid fertiliser consisting of at least a part of said liquid fraction depleted of ammonia coming from said stripping tower designed to be used as liquid fertiliser; said outlet being preferably located close to a hopper designed to collect said liquid fertiliser, said hopper being preferably equipped with a valve designed to favour the picking up of said liquid fertiliser.

In particular, said grinding means can comprise at least one grinder pump located upstream of said separator and/or downstream of the separator and upstream of said biofiltering bed, said grinder pump being designed to grind the digestate and/or said solid fraction, or said separators can comprise grinding means for said solid fraction, for example being a screw separator. Preferably, the average grain size of said solid fraction inside said biofiltering bed is between approximately 100µm and approximately 5mm.

Preferably, said stripping tower can comprise a tank, a pump and spray nozzles, said tank can be located preferably at the bottom of said stripping tower; said tank being connected to said separator in such a way as to receive said liquid fraction; said pump being designed to send said liquid fraction from said tank to said spray nozzles positioned at the top of said stripping tower, said tank being designed to collect said liquid fraction returning from said spray nozzles for recirculating said liquid fraction towards said spray nozzles by means of said pump, said tank being further connected to an outlet of said stripping tower.

Even more preferably, said pump connected to said tank can be a grinder pump. Moreover, said outlet of said stripping tower can be connected to a hopper for the collection of a portion of said liquid fraction as liquid fertiliser and can be connected to said biodigester for the reuse of a remaining portion of said liquid fraction treated inside said biodigester, advantageously allowing the recirculation of said liquid fraction towards the digester.

Lastly, said plant can comprise at least one valve, preferably a dosing and pressure control valve, located at least at one pipe which conveys said gas coming from said stripping tower towards said biofiltering bed, in particular said at least one pipe can convey the gas coming from said stripping tower towards perforated pipes present on the bottom of said biofiltering bed; said at least one valve being designed to introduce air into said at least one pipe, in such a way that said gas coming from said stripping tower, mixing with the air, reaches a temperature of between 60°C and 80°C before reaching said biofiltering bed.

Moreover, an aspect which is not part of the invention is a process for the exploitation of the anaerobic digestate leaving biogas energy production plants, said biogas energy production plants comprising a biodigester designed to treat an organic matrix and to produce biogas and a digestate and a cogenerator (or alternatively a boiler), fed by the biogas coming from said biodigester and designed to produce energy and exhaust gases; said process comprising the following steps:
- separating digestate coming from said biodigester to provide a liquid fraction and a solid fraction;
- stripping ammonia of the liquid fraction obtained in said separating step by means of the exhaust gases coming from said cogenerator, to obtain a gas rich in ammonia and water vapour and a liquid fraction which is depleted of ammonia;
- insufflating the solid fraction obtained in said separating step by means of the gas obtained in said stripping step to obtain a solid fraction enriched in ammonia and pasteurised;
- withdrawing a first part of said liquid fraction depleted of ammonia obtained in said stripping step; and
- sending to said biodigester a remaining part of said liquid fraction depleted of ammonia obtained in said stripping step.

Moreover, a second aspect which is not part of the invention is a plant for the exploitation of the anaerobic digestate leaving biogas energy production plants, said biogas energy production plants comprising a biodigester designed to treat an organic matrix and to produce biogas and a digestate and a cogenerator (or alternatively a boiler), fed by the biogas coming from said biodigester and designed to produce energy and exhaust gases; said plant being characterised in that it comprises:
- a separator, fed by the digestate coming from said biodigester and designed to provide a liquid fraction and a solid fraction;
- a stripping tower, fed at the top by the liquid fraction coming from said separator and at the bottom by the exhaust gases coming from said cogenerator, and designed to produce a gas rich in ammonia and water vapour and a liquid fraction depleted of ammonia;
- a container, fed by the solid fraction coming from said separator and by the gas coming from said stripping tower and designed to supply a solid fraction enriched with nitrogen and pasteurised; and
- a hopper fed by part of said liquid fraction depleted of ammonia coming from said stripping tower and from which said liquid fraction is collected as liquid fertiliser; the remaining part of said liquid fraction depleted of ammonia coming from said stripping tower being directed to said biodigester.

Preferably, according to said aspect, said stripping tower comprises a tank, for collecting the liquid fraction coming from said separator, from which said liquid fraction is sent to the top of said stripping tower and to which said liquid fraction returns after having passed through said stripping tower and from which said liquid fraction is again sent to the top of said stripping tower or part to said hopper and part to said biodigester.

Even more preferably, according to said aspect, said liquid fraction from said tank is sent to the top of said stripping tower by means of a pump, also designed to grind any solid residue present in the liquid fraction coming from said separator.

In particular, according to said aspect of the invention, the gas coming from said stripping tower and sent to said container is mixed with air, to control the temperature.

The invention is now described, by way of example and without limiting the scope of the invention, according to a relative preferred embodiment, with particular reference to example 1 and the accompanying drawings, in which:
- Figure 1 shows a schematic representation of a plant for the exploitation of anaerobic digestate leaving a biogas energy production plant according to a first embodiment of the invention, and

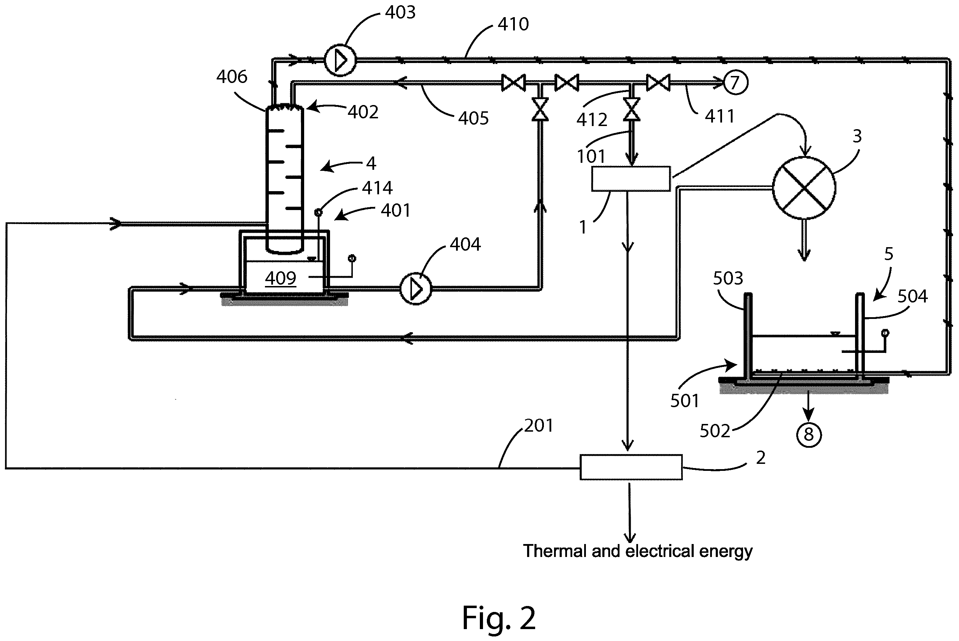

- Figure 2 shows a block diagram of a plant for the exploitation of anaerobic digestate leaving a biogas energy production plant according to a second embodiment of the invention.

**In** the description of the steps and of the elements included, respectively, in the process and in the plant according to the invention, one means one or more, if necessary placed in series or in parallel.

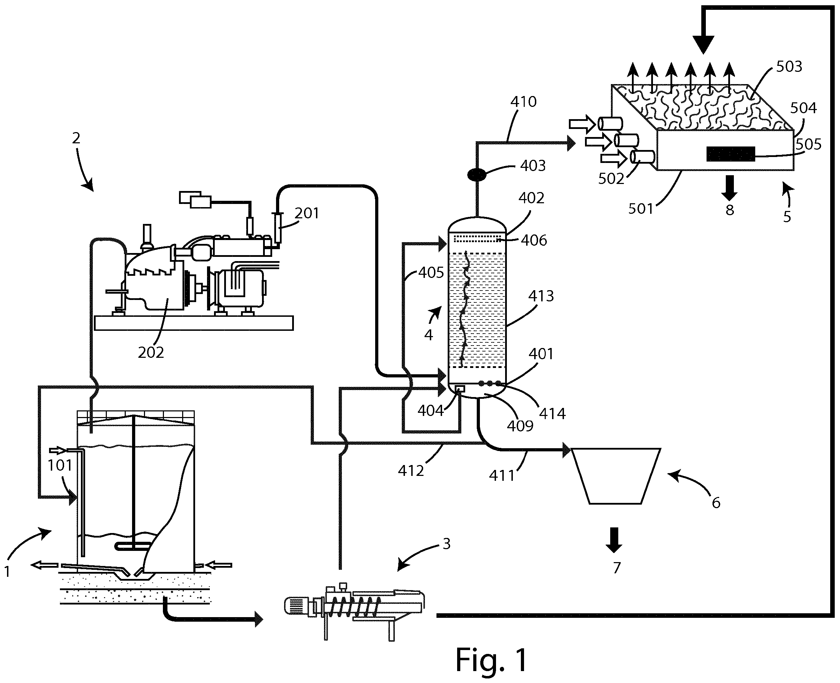

With reference to Figure 1, a plant for the exploitation of the anaerobic digestate leaving a plant for the production of energy from biogas according to the invention comprises: a biodigester 1, connected to a cogenerator 2, and to which the biodigester 1 sends the biogas produced, said biodigester 1 processing an organic matrix and being further connected to a separator 3 to which the biodigester 1 sends the outgoing digestate. Said separator 3 separates the digestate received into liquid fraction and solid fraction and sends them, respectively, to a stripping tower 4 and to a biofiltering bed 5.

In particular, the digestate and/or the solid separate fraction can be treated in advance by mechanical grinding, for example by means of a grinder pump or grinding means included inside said separator 3.

Said biofiltering bed 5 collects the solid fraction of digestate and allows the solid fraction to be processed in such a way as to obtain a fertiliser enriched with nitrogen and pasteurised, at the outlet from said biofiltering bed 5.

Said stripping tower 4 comprises a lower portion 401 or bottom 401, an upper portion 402 or head 402, and side walls 413. **In** particular, said lower portion 401 receives, by means of a hydraulic connection, the liquid fraction of the digestate from the separator 3, and receives the exhaust fumes directly from the cogenerator 2. Moreover, said lower portion 401 is connected hydraulically with a hopper 6 fro which leaves the processed part of the liquid fraction of digestate as liquid fertiliser 7. Lastly, said lower portion 401 is also connected with the biodigester 1 to which it can send a part of the liquid fraction of processed digestate for feeding the biodigester 1.

Said cogenerator 2 comprises an internal combustion engine 202, which produces high temperature exhaust fumes, and a telescopic pipe 201 which conveys, in a direct manner, said high temperature exhaust fumes towards said lower portion 401 of the stripping tower 4, and which is able, as required, to uncouple the cogenerator system 2 from the stripping tower 4 when the latter is stopped or undergoing maintenance. Said internal combustion engine 202 è preferably located close to the bottom 401 of said stripping tower 4.

The fumes have an average temperature at the outlet from the internal combustion engine 202 of the cogenerator 2 of between 280°C and 480°C, which reduces during the path inside the telescopic pipe 201, until reaching an average temperature of between 260°C and 460°C at the inlet of the stripping tower 4.

Said fumes are drawn to the upper portion 402 of the stripping tower 4 by the action of a blower 403 located downstream of said stripping tower 4 with respect to the direction of flow of said exhaust fumes. In this way, said stripping tower 4 can be put in a slight negative pressure together with all the circuit for connection to the cogenerator 2, in order not to suffocate the internal combustion engine 202 of the cogenerator 2, causing it to switch off.

The stripping tower 4 comprises a tank 409, positioned in the lower portion 401, where the liquid digestate coming from the separator 3 is collected up to a predetermined threshold value, said tank 409 being fitted with level sensors 414 which control the quantity di digestate collected so that the liquid coming from the separator 3 does not exceed this threshold value. Said stripping tower 4 also comprises a pump 404, preferably a grinder pump 404, which, after the filling of the tank 409, sends the liquid fraction of the digestate from the tank 409 towards the spray nozzles 406 located in the upper portion 402 of stripping tower 4. In particular, said liquid fraction is sent towards said spray nozzles 406 through pipes 405. Said spray nozzles 406 spray the liquid digestate towards the chutes located inside the stripping tower 4, which allow an increase in the time of contact of the fluid film which flows on a plurality of plates of said stripping tower 4 with the hot fumes of the cogenerator. Flowing on the chutes the digestate will reach the tank 409 to be again sent to the sprays. In fact, the hydraulic retention time of said liquid fraction inside said stripping tower 4 is a function both of the quantity of heat available and of the process efficiency to be achieved, on the basis of the characteristics of the digestate to be treated.

Moreover, since the fumes leaving an internal combustion engine 202 can be rich in nitric oxides or NOₓ, the contact between said hot fumes with said liquid fraction, in particular with said liquid fraction in a nebulised form, advantageously allows the NOₓ to react with the ammonia and the urea contained in said liquid fraction, with consequent reduction of the emissions of NOₓ into the atmosphere. The reaction is particularly efficient since said fumes flow in a counter-current fashion with respect to said nebulised liquid fraction.

In this way, a gas rich in ammonia and water vapour and lacking in NOₓ is obtained at the outlet from said upper portion 402 of said stripping tower 4. Said gas rich in ammonia and water vapour from the upper portion 402 of the stripping tower 4 is conveyed through a pipe 410 towards said biofiltering bed 5 which collects the solid fraction of the digestate coming from the separator 3 or from said means for mechanical treatment of the solid fraction. At the end of the treatment cycle, a first portion 411 of the liquid digestate processed in the stripping tower 4, from which has been removed the ammonia is sent towards the hopper 6 from which is collected the liquid fertiliser 7, for example by means of a special valve; a second portion 412 of the digestate processed in the stripping tower 4 can be conveyed towards the biodigester 1.

In particular, said liquid fertiliser 7 has a pH of between 7 and 8, which is advantageously compatible with high quality farming.

These optimum pH values are reached thanks to the total absence of chemical correctors, which renders said liquid fertiliser advantageously useable in farming in which chemical fertilisers cannot be used, for example biological farming.

Moreover, thanks to the sterilisation of said liquid fertiliser 7 by means of said high temperatures of the fumes, said liquid fertiliser is advantageously compatible with farming which, currently, only allows chemically synthesised or chemical fertilisers, for example intensive farming or fourth range farming production, in which fertilisers containing potential pathogenic germs are not permitted.

Lastly, said liquid fertiliser 7, since it has been obtained by reducing the ammonia fraction of said liquid fraction of digestate, advantageously eliminates the risk of dispersion of ammonia into the atmosphere during the use of said fertiliser.

In this way, it is the digestate itself which becomes fertiliser, whilst in the prior art processes the nutrients are extracted from said digestate to produce fertilisers with the addition of other chemical elements.

The stripping tower 4 also comprises, at the upper part of the tank 409, a suitable system of valves for the entrance of ambient air, which is able to guarantee the operation of the system at atmospheric pressure.

Said pump 404 inside the stripping tower 4 is able to:
- fill the volume up to the predetermined threshold level measured by the sensors 414;
- grind and recycle the liquid for the predetermined retention time (as mentioned above, as it is a function of the available heat and the efficiency level to be achieved, it can be varied each time)
- empty the system at the end of the cycle;
- move and grind the material at the bottom 401 of the tank 409 in order to avoid the formation of deposits;
- carry out a regular washing cycle with water, to prevent the dried material from blocking the pipes 405, the spray nozzles 406 and every other component included inside the stripping tower; and
- grind any solid residue present in the digestate coming from the separator 3 (for example straw) to prepare the hydrolysis of the lignin contained in the liquid fraction of the digestate, and homogenise the product.

The spray nozzles 406 uniformly diffuse the liquid fraction of digestate on the plates of the tower present in the upper portion 402 of the stripping tower 4 favouring the formation of a fluid film which results in the following phenomena:
- the content of ammonium nitrate changes to the gaseous state as a function of the predetermined period of retention and the temperatures reached;
- the digestate is sterilised by eliminating substantially every possible pathogenic bacteria;
- a significant quantity of the aqueous fraction of the digestate is vaporised, and is drawn from above, together with the ammonium nitrate, by the action of the blower 403, with consequent concentration of the content of macro e micro elements which are valuable in farming inside the liquid fertiliser 7;
- the molecules of lignin and other lignocellulosic substances undergo a process of hydrolysis and are converted into cellulose and other soluble monomers.

In particular, the mechanical treatment of the liquid fraction aimed at reducing the grain size of the solid residue or particulates contained in it, allows the heat exchange to be further maximised between liquid fraction and fumes, further favouring the hydrolysis of the lignocellulosic compounds. In this way, a material is obtained which can be processed inside said biodigester 1. The obtaining of the new material, which has new bio-chemical potential, is particularly advantageous, since it is material contained in the digestate which usually remains unused. Moreover, the liquid fraction portion which can be sent to said biodigester 1 is depleted in terms of ammonia, thereby improving the ratio between carbon and nitrogen inside said digester 1.

In this regard, it should be noted that in numerous prior art plants the recirculation of the liquid fraction, even if it is only for diluting the material inside the biodigester, is not usually recommended due to the high content of ammonia of said liquid fraction or its high pH value.

Lastly, the sending of part of the liquid fraction inside said biodigester advantageously allows the recirculation of heat and therefore thermal power inside the plant, optimising in the best way the energy balance of the plant itself.

Said second portion 412 of digestate processed by the stripping tower 4 reaches the biodigester 1 by means of the same main grinder pump with a suitable system of pneumatic valves which avoid the contact of said second portion 412 with other organic matrices before entry inside the biodigester 1, since the heat contained in the liquid treated could develop the anaerobic bacterial reaction also outside the biodigester 1 with consequent loss of biogas.

In parallel to the process described above, said solid fraction is treated to obtain said solid fertiliser 8 by means of the following process.

Said biofiltering bed 5 receives said solid fraction coming from said separator. In particular, said biofiltering bed 5 is located beneath said separator 3 or beneath said mechanical means for its grinding, and receives a daily flow of solid fraction of digestate of between 10% and 40% of the matrices entering the biodigester 1.

Said solid fraction can in fact be pre-treated mechanically by grinding in such a way as to have an optimum grain size, preferably between approximately 100µm and approximately 5mm.

In particular, said biofiltering bed 5 comprises: a lower portion 501, an upper portion 503, side walls 504 and a movable hatch 505, also called an openable hatch 505.

Said biofiltering bed 5 is designed to contain the solid material leaving the biodigester for a predetermined number of days to be enriched with ammonia and pasteurised by the insufflating of the mixture of ammonia and vapour transported by the pipe 410 coming from the stripping tower 4 towards perforated pipes 502 which are connected to the blower 403.

In particular, the optimum grain size of said solid fraction guarantees the low permeability of it to said mixture of ammonia and vapour, with consequent long times of residence of the gases, in order to maximise the bio-absorption of the ammonia in the solid. Moreover, the bed of filter material comprising said solid fraction, or biofiltering bed, has high values of carbon, designed to maximise the bio-absorption of the ammonium nitrate.

The temperature of the gas rich in ammonia and water vapour coming from the stripping tower 4 is between 80°C and 150°C, and is lowered by addition of ambient air until reaching a temperature of between 60°C and 90°C, preferably equal to approximately 80°C.

In particular, said stripping tower 4 has at said upper portion 402 a dosing and pressure control valve. Said dosing valve provides the correct quantity of oxygen to the hot air at the outlet from said stripping tower, so as to favour said bio-absorption process, and allow the adjustment of the relative temperature, in such a way as to reach said range of temperatures between 60°C and 90°C, preferably between 60°C and 80°C, in order to optimise the biological processes which occur in the biofiltering bed.

Moreover, said dosing and pressure control valve is designed to avoid, after a malfunction of the blower 403, that said stripping tower 4 can enter into pressure (or negative pressure).

The ambient air is also added in order to provide the oxygen to activate and feed the aerobic digestion of the pile of solid digestate falling from the separator 3. The aerobic reaction is exothermal and helps to maintain a temperature in the pile of approximately 70°C, which is a temperature at which the enrichment in nitrogen and nutrients and the pasteurisation process of the solid separate occurs. The pile of solid digestate broken up falling from the separator has a height of between 1 and 5 metres. In this way, the pile itself constitutes a biofiltering bed rich in carbon, in which the bacteria, by means of the aerobic process, transform the ammonium nitrite into nitric nitrogen allowing the entrapment inside the solid matrix.

Moreover, said biofiltering bed dries the vapours arriving from the blower 403. The solid separate is insufflated for a period of time varying between 1 and 5 days, at the end of which it is rich with an organic fraction and all the micro and macro elements necessary for the fertilisation, it has been enriched with the excess of nitrogen eliminated from the liquid fraction, it is pasteurised, and it is stabilised thanks to the aerobic reaction forced by the continuous insufflating of oxygen and hot vapours. In this way, a solid fertiliser is created usually starting from the elements included inside the bio-digestate, without the addition of external chemical additives.

The openable hatch 505 allows the extraction and the collection of the solid fertiliser 8 (that is to say, nitrogen fertiliser) obtained.

Lastly, it should be noted that, once at steady state conditions, said biofiltering bed can be renewed in a continuous manner starting from said solid fraction of the bio-digestate, in order to guarantee the maximum efficiency of said bio-absorption process and the removal of the emissions of ammonia into the atmosphere.

Said fertiliser 8 also has said optimum pH values, that is, pH values between 7 and 8.

### Example 1. 250 kW electrical plants

A 6 m high, 1.5 m diameter stainless steel stripping tower, equipped with a cylindrical base container for the treatment of a cubic metre of liquid digestate for each treatment cycle, has been made inside an anaerobic digestion plant with a 3000 m³ digester for the treatment of livestock waste, daily flow rate 70 m³ (60 m³ cattle slurry + 10 m3 hydrolysed digestate, or 80 m³ solely cattle slurry) with a 250 kW electrical cogenerator.

The fumes produced by the internal combustion engine of the cogenerator contain a quantity of heat substantially equal to 300 kW/h and have an average temperature at the outlet of the engine of approximately 400°C, which reduces along the path towards the stripping tower until reaching an average temperature of 320°C at the inlet of the stripping tower. The fumes inside the stripping tower are drawn upwards using a large capacity fan to form a negative pressure inside the towers of just a few mbar and a pressure below the biofiltering bed of 200 mbar

The stripping tower, all the pipes and the components in contact with the material to be treated are made of stainless steel, in order to withstand the high thermal stresses, the corrosive nature of the material to be treated, which are rich in metals, and the high corrosive power of the engine gases.

The plant also comprises a screw separator, overlying the biofiltering bed made of concrete 5m x 5m x 5m with a stainless steel side which can be opened for treating the fraction which can be shovelled.

A hopper may be added to the stripping tower which is able to feed the line for bottling concentrated liquid fertiliser coming from the tower.

The pump for movement of the liquid must be a grinder pump and be able to work at high operating temperatures of the liquid to be treated (at least 70°C). The liquid digestate falls into the tank located in the lower portion of the stripping tower, which is filled up to a volume of 1m³. During the pasteurisation cycle, the pump draws liquid from the bottom 401 and returns it to the top of the stripping tower for a period of time to ensure the zeroing of the pathogenic bacterial loads as well as continuously moving the bottom 401 to avoid deposits and stagnation.

The plant also comprises a series of pneumatic valves controlled by a programmable logic controller (PLC) connected to various level and temperature sensors installed in the stripping tower. The control system uses the same pump firstly for recycling, then for emptying and then for washing the tower..

The stripping tower treats at the inlet, daily, approximately 30 m³/d of liquid fraction of the digestate coming from the separator. The drops of digestate falling in the stripping tower, once they reach the chutes present in the stripping tower, reach a temperature substantially equal to 110°C.

The quantity of liquid fertiliser and organic matrix obtained per day coming from the stripping tower is approximately 23.04 m³/d.

The daily quantity coming from the stripping tower towards the biodigester of the fraction for re-use of the digestate treated and rich in cellulose was approximately 10 m³/d. By injecting the liquid digestate treated in the biodigester, a saving has been obtained substantially equal to 25% of the matrices at the inlet with the same energy produced.

The time required for loading and unloading the stripping tower is substantially equal to 8 minutes, whilst the time for recirculation of the liquid fraction inside the stripping tower is substantially equal to 32 minutes.

The separator produced a quantity of solid separate digestate substantially equal to 18m³/d and it was loaded with substantially 70 m³/d, equal to approximately 70000 kg of digestate per day. The solid separate has been accumulated in the biofiltering bed, comprising a container made of concrete and stainless steel located above the separator and able to contain at least 4 days of solid material coming from the biodigester. The container is accessible from the outside through the stainless steel door which opens once the cycle has finished and it allows it to be emptied by mechanical means. The mixture of ammonia and vapour coming from the stripping tower has been blown in the perforated pipes present on the bottom of the biofiltering bed with a flow rate of approximately 1160 m³/h. The temperature of the flow of gas which is rich in ammonia and water vapour at the outlet from the stripping tower is equal to 75-80°C, and adding ambient air, maintains the temperature in the pile always greater than 70°C.

The pile of solid digestate broken up falling from the separator has been kept at a height varying between 1 and 5 m during the 5 days of treatment.

The solid separate has been treated for the period of operation of the cycle, at the end of which it is rich with an organic fraction and all the micro and macro elements necessary for the fertilisation, it has been enriched with the excess of nitrogen eliminated from the liquid fraction, it is pasteurised, and it is stabilised thanks to the aerobic reaction forced by the continuous insufflating of oxygen and hot vapours. It is then extracted and packaged ready for sale.

A removal of the ammonium nitrate in the liquid digestate of approximately 50% is obtained with this process. Almost all of the ammonium nitrate removed from the liquid fraction has been incorporated in the solid fraction.

The fertilisers obtained in this way have been tested in greenhouses, obtaining increases in productivity per m2 varying between 30% and 70% depending on the conditions di fertility of the fertilised soil. Moreover, the fertilisers obtained have been able to reconstruct the necessary layer of fertile organic substance where the chemical fertilisation had rendered the greenhouses inert.

The solid fraction was lastly used with success for growing worms, obtaining high quality fertilisers, rich in humic and fulvic acids which are able to improve, in some cases by even more than 100%, the productivity of the fertilised land.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A process for the exploitation of the anaerobic digestate leaving biogas energy production plants, said biogas energy production plants comprising a biodigester (1) designed to treat an organic matrix and to produce biogas and a digestate and a cogenerator (2), fed by the biogas coming from said biodigester (1) and designed to produce energy and exhaust gases; said process comprising the following steps:
- separating said digestate coming from said biodigester (1) to provide a liquid fraction, optionally comprising solid residues, and a solid fraction;
- simultaneously with and/or before and/or after said separating step, grinding said digestate and/or said solid fraction;
- stripping ammonia of the liquid fraction obtained in said separating step by means of the exhaust gases coming from said cogenerator (2), to obtain a gas rich in ammonia and water vapour and a liquid fraction which is sterilised and depleted of ammonia designed to be used as liquid fertiliser; and
- insufflating the solid fraction obtained in said separating step by means of the gas obtained in said stripping step to obtain a solid fraction enriched in ammonia and pasteurised, wherein said gas insufflated in said solid fraction is pre-mixed with air;
said process being **characterised in that** said gas insufflated in said solid fraction and pre-mixed with air has a temperature of between 60°C and 80°C.

2. The process according to claim 1, **characterised in that** it comprises the following steps:
- withdrawing a first part of said liquid fraction depleted of ammonia obtained in said stripping step; and
- sending to said biodigester (1) a remaining part of said liquid fraction depleted of ammonia obtained in said stripping step.

3. The process according to any one of the preceding claims, **characterised in that** said liquid fraction comprises solid residues and said step for stripping ammonia comprises the following sub-steps:
- grinding solid residues of said liquid fraction using grinding means (404);
- nebulising said liquid fraction comprising shredded solid residue; and
- flowing said nebulised liquid fraction in counter-current mode with respect to said exhaust gases.

4. The process according to claim 3, **characterised in that** said sub-steps of said stripping step are repeated.

5. The process according to any one of the preceding claims, **characterised in that** said gases used during said stripping step have a temperature of between 260°C and 460°C, preferably equal to approximately 320°C.

6. The process according to any one of the preceding claims, **characterised in that** said gas insufflated in said solid fraction has a temperature of between 75°C and 80°C.

7. The process according to any one of the preceding claims, **characterised in that** said stripping step occurs without the use of pH correctors.

## Patentansprüche

1. Verfahren zur Verwertung von anaeroben Gärresten, die aus Anlagen zur Erzeugung von Energie aus Biogas stammen, wobei die Anlagen zur Erzeugung von Energie aus Biogas einen Biokocher (1), der zur Behandlung einer organischen Matrix und zur Erzeugung von Biogas und Gärresten bestimmt ist, und einen Kogenerator (2) umfassen, der durch das aus dem Biokocher (1) stammende Biogas gespeist wird und zur Erzeugung von Energie und Abgasen bestimmt ist; wobei das Verfahren die folgenden Schritte umfasst:
- trennen des aus dem Bioklärer (1) stammenden Gärrestes, um eine flüssige Fraktion, die gegebenenfalls feste Rückstände enthält, und eine feste Fraktion zu erhalten;
- gleichzeitig mit und/oder vor und/oder nach dem Trennungsschritt, Zerkleinern des Gärrückstands und/oder der festen Fraktion;
- strippen von Ammoniak aus der in dem Trennschritt erhaltenen flüssigen Fraktion mit Hilfe der Abgase, die von dem Kogenerator (2) kommen, um ein an Ammoniak und Wasserdampf reiches Gas und eine sterilisierte und an Ammoniak verarmte flüssige Fraktion zu erhalten, die zur Verwendung als Flüssigdünger bestimmt ist; und
- einblasen der in der Trennstufe erhaltenen festen Fraktion mit Hilfe des in der Abstreifstufe erhaltenen Gases, um eine mit Ammoniak angereicherte und pasteurisierte feste Fraktion zu erhalten, wobei das in die feste Fraktion eingeblasene Gas mit Luft vorgemischt wird;
wobei das Verfahren **dadurch gekennzeichnet ist, dass** das in die feste Fraktion eingeblasene und mit Luft vorgemischte Gas eine Temperatur zwischen 60°C und 80°C aufweist.

2. Verfahren nach Anspruch 1, **dadurch gekennzeichnet, dass** es die folgenden Schritte umfasst:
- entnahme eines ersten Teils der flüssigen Fraktion, die durch den Schritt des Strippens von Ammoniak abgereichert wurde; und
- zuführen eines restlichen Teils der flüssigen Fraktion, die in der Abtrennungsstufe erhalten wurde und an Ammoniak verarmt ist, zu dem Biodigestor (1).

3. Verfahren nach einem der vorhergehenden Ansprüche, **dadurch gekennzeichnet, dass** die flüssige Fraktion feste Rückstände enthält und der Schritt zum Strippen von Ammoniak die folgenden Teilschritte umfasst:
- zerkleinern der festen Rückstände der flüssigen Fraktion unter Verwendung von Zerkleinerungsmitteln (404);
- zerstäuben der flüssigen Fraktion, die zerkleinerte feste Rückstände enthält; und
- strömenlassen der vernebelten flüssigen Fraktion im Gegenstrom zu den Abgasen.

4. Verfahren nach Anspruch 3, **dadurch gekennzeichnet, dass** die Teilschritte des Strippens wiederholt werden.

5. Verfahren nach einem der vorhergehenden Ansprüche, **dadurch gekennzeichnet, dass** die während des Strippschrittes verwendeten Gase eine Temperatur zwischen 260°C und 460°C, vorzugsweise gleich etwa 320°C, aufweisen.

6. Verfahren nach einem der vorangehenden Ansprüche, **dadurch gekennzeichnet, dass** das in die feste Fraktion eingeblasene Gas eine Temperatur zwischen 75°C und 80°C hat.

7. Verfahren nach einem der vorhergehenden Ansprüche, **dadurch gekennzeichnet, dass** der Strippschritt ohne Verwendung von pH-Korrekturmitteln erfolgt.

## Revendications

1. Procédé d'exploitation du digestat anaérobie sortant des centrales de production d'énergie au biogaz, lesdites centrales de production d'énergie au biogaz comprenant un biodigesteur (1) destiné à traiter une matrice organique et à produire du biogaz et un digestat et un cogénérateur (2), alimenté par le biogaz provenant dudit biodigesteur (1) et destiné à produire de l'énergie et des gaz d'échappement; ledit procédé comprenant les étapes suivantes:
- séparer ledit digestat provenant dudit biodigesteur (1) pour fournir une fraction liquide, comprenant éventuellement des résidus solides, et une fraction solide;
- simultanément avec et/ou avant et/ou après ladite étape de séparation, broyer ledit digestat et/ou ladite fraction solide;
- éliminer l'ammoniac de la fraction liquide obtenue dans ladite étape de séparation au moyen des gaz d'échappement provenant dudit cogénérateur (2), afin d'obtenir un gaz riche en ammoniac et en vapeur d'eau et une fraction liquide stérilisée et appauvrie en ammoniac destinée à être utilisée comme engrais liquide; et
- insuffler la fraction solide obtenue dans ladite étape de séparation au moyen du gaz obtenu dans ladite étape d'élimination pour obtenir une fraction solide enrichie en ammoniac et pasteurisée, dans laquelle ledit gaz insufflé dans ladite fraction solide est prémélangé avec de l'air;
ce procédé est **caractérisé par le fait que** le gaz insufflé dans ladite fraction solide et prémélangé à l'air a une température comprise entre 60°C et 80°C.

2. Procédé selon la revendication 1, **caractérisé en ce qu'**il comprend les étapes suivantes:
- prélèvement d'une première partie de ladite fraction liquide appauvrie en ammoniac obtenue lors de ladite étape d'élimination; et
- envoyer dans ledit biodigesteur (1) une partie restante de ladite fraction liquide appauvrie en ammoniac obtenue lors de ladite étape d'élimination.

3. Procédé selon l'une quelconque des revendications précédentes, **caractérisé en ce que** ladite fraction liquide comprend des résidus solides et que ladite étape d'élimination de l'ammoniac comprend les sous-étapes suivantes:
- broyage des résidus solides de ladite fraction liquide à l'aide de moyens de broyage (404);
- nébulisation de ladite fraction liquide comprenant des résidus solides broyés; et
- écoulement de ladite fraction liquide nébulisée en mode contre-courant par rapport aux gaz d'échappement.

4. Procédé selon la revendication 3, **caractérisé en ce que** les sous-étapes de l'étape de décapage sont répétées.

5. Procédé selon l'une quelconque des revendications précédentes, **caractérisé en ce que** lesdits gaz utilisés lors de ladite étape d'élimination ont une température comprise entre 260°C et 460°C, de préférence égale à environ 320°C.

6. Procédé selon l'une quelconque des revendications précédentes, **caractérisé en ce que** ledit gaz insufflé dans ladite fraction solide a une température comprise entre 75°C et 80°C.

7. Procédé selon l'une quelconque des revendications précédentes, **caractérisé en ce que** ladite étape d'élimination se déroule sans l'utilisation de correcteurs de pH.
